# FASCICULE DE BREVET EUROPEEN

(11) **EP 0 516 519 B1**
(45) Date de publication et mention de la délivrance du brevet: **26.04.1995**
(21) Numéro de dépôt: 92401418.6
(22) Date de dépôt: 25.05.1992
(51) Int. Cl.: F02K 9/97

(54) **Mécanisme autoverrouillable et réversible de déploiement de divergent de tuyère de moteur-fusée**
Verriegelbarer und umkehrbarer Mechanismus zum Verlängern eines Austrittskonus einer Raketendüse
Selflocking, reversible mechanism for the deployment of a rocket nozzle cone

(30) Priorité: 30.05.1991 FR 9106547
(43) Date de publication de la demande: 02.12.1992
(73) Titulaire: SOCIETE EUROPEENNE DE PROPULSION, 92150 Suresnes (FR)
(72) Inventeur: Chatenet, Luc H., F-27200 Vernon (FR); Desclos, Pierre, F-27200 Vernon (FR)
(74) Mandataire: Thévenet, Jean-Bruno

(56) Documents cités:
- FR-A- 2 422 831
- FR-A- 2 622 931
- US-A- 3 526 365
- US-A- 4 676 436

## Description

### Domaine de l'invention

La présente invention a pour objet un mécanisme auto-verrouillable et réversible de déploiement d'un divergent déployable de tuyère de moteur-fusée, comprenant trois ensembles d'actionnement identiques montés sur un bâti principal fixé sur une partie non déployable de la tuyère.

On utilise fréquemment, notamment sur les étages intermédiaires de lanceurs, des tuyères de moteur-fusée à divergent déployable qui permettent d'adapter la section de sortie de la tuyère en fonction de la pression ambiante, laquelle diminue entre les faibles altitudes proches du sol et les altitudes élevées pour lesquelles le véhicule spatial quitte l'atmosphère terrestre, de telle sorte qu'une poussée optimale soit conservée malgré les changements d'altitude.

Le déploiement de la partie déployable du divergent doit ainsi pouvoir s'effectuer de façon automatique et fiable avec un minimum de dépense d'énergie, à partir d'une commande électrique ou hydraulique, voire pneumatique.

### Art antérieur

Il a déjà été proposé différents types de mécanismes de déploiement de divergents déployables de tuyères de moteur-fusée, en particulier des mécanismes de déploiement utilisant des systèmes à câble, vis à bille, poutre déroulable, membrane ou ressort.

Ces mécanismes connus sont en général non réversibles, c'est à dire que, lorsqu'ils assurent une fonction de verrouillage, comme par exemple les systèmes à poutre déroulable, ce verrouillage en position déployée est irréversible. Ces types de mécanismes de déploiement ne sont donc pas adaptés à des engins tels que des avions spatiaux, pour lesquels il est nécessaire à la fois de déployer puis de reployer le divergent. Par ailleurs, certains mécanismes de déploiement sont équipés de dispositifs de verrouillage annexes, à commande électrique, qui compliquent la réalisation de l'ensemble et accroîssent la masse de celui-ci.

Dans l'ensemble, les mécanismes de déploiement déjà proposés sont d'une réalisation complexe, sont encombrants ou apportent un accroissement de masse très pénalisant pour un véhicule spatial.

On connaît ainsi par le document FR-A-2 568 316 un système de divergent déployable à un seul élément mobile par translation parallèle à l'axe de la tuyère. L'élément mobile est déplacé à l'aide de vérins le long de colonnes fixes disposées parallèlement à l'axe de la tuyère.

Il a été également proposé des mécanismes de déploiement de divergent comportant des ensembles de bielles et de vérins. Les mécanismes connus de ce type sont toutefois également encombrants, ne sont pas à la fois verrouillables et réversibles et ne sont pas toujours adaptés à des divergents déployables de type rigide.

On connaît ainsi par le document US-A-4 489 889 un mécanisme de déploiement de divergent non réversible utilisant un vérin associé à un système de bielles et de cames. Ce mécanisme assez complexe n'assure toutefois aucun autoverrouillage, et en position déployée, il est nécessaire que le vérin reste en charge, ce qui tend à réduire la fiabilité.

On connaît encore par le document FR-A-2 622 931 un mécanisme d'actionnement pour une tuyère de poussée extensible de moteur-fusée, ce mécanisme d'actionnement comprenant un ensemble de bielles mues par des vérins. Le mécanisme d'actionnement décrit dans ce document comprend des organes de guidage et de commande distincts qui, dans les deux positions, repliée et déployée, apportent un encombrement supplémentaire conséquent et n'assurent ni un verrouillage automatique de la virole mobile dans les positions repliée et déployée, ni un guidage sûr de celle-ci lors de son arrivée dans les positions extrêmes repliée et déployée.

### Objet et description succincte de l'invention :

L'invention vise à remédier aux inconvénients précités et à réaliser un mécanisme de déploiement de divergent déployable qui soit à la fois simple, léger et fiable et assure un auto-verrouillage au moins dans la position déployée tout en garantissant une réversibilité de la manoeuvre de déploiement, de manière à pouvoir s'appliquer notamment à des avions spatiaux.

Ces buts sont atteints grâce à un mécanisme auto-verrouillable et réversible de déploiement d'un divergent déployable de tuyère prolongeant une chambre de combustion de moteur-fusée, comprenant trois ensembles d'actionnement identiques montés sur un bâti principal fixé sur ladite chambre de combustion ou une partie non déployable de la tuyère, ce mécanisme étant
caractérisé en ce que chaque ensemble d'actionnement comprend :
a) une butée de centrage montée au voisinage du bord amont de la partie déployable du divergent, en aval du bâti principal,
b) un support de bielle monté sur ladite partie déployable du divergent en aval de ladite butée de centrage,
c) une première bielle dont une première zone est articulée sur ledit bâti principal,
d) une deuxième bielle, dont une extrémité amont est articulée sur une deuxième zone de ladite première bielle et une extrémité aval est articulée sur ledit support de bielle, ladite deuxième bielle coopérant avec ladite butée de centrage au moins dans la position déployée,
e) un actionneur linéaire comprenant un corps ancré et articulé sur une partie non déployable de la tuyère et un organe moteur mobile dont l'extrémité libre est articulée sur une troisième zone de ladite première bielle.

Selon l'invention, les première et deuxième bielles et l'actionneur sont agencés de telle manière qu'ils assurent un auto-verrouillage en position déployée par passage au point mort ou légèrement au-delà du point mort pour lequel il y a alignement des points constitués par l'axe d'articulation, sur le bâti principal, de la première zone de la première bielle, l'extrémité amont de la deuxième bielle articulée sur la deuxième zone de la première bielle et l'extrémité aval de la deuxième bielle articulée sur le support de bielle monté sur la partie déployable du divergent, et l'actionneur est désactivé dans chacune des positions finales de déploiement et de reploiement du divergent déployable. Il se trouve verrouillé dès qu'il est désactivé.

De préférence, la butée de centrage présente la forme d'un vé et assure la position correcte de la deuxième bielle pour réaliser le verrouillage, en position déployée.

Avantageusement, le mécanisme de déploiement coopère avec un dispositif de commande prévu pour être activé à des instants où le moteur-fusée n'exerce aucune poussée. De la sorte, l'actionneur, qui peut être un simple vérin, peut être de faible puissance.

Le bâti principal peut être fixé par exemple sur la chambre de combustion du moteur-fusée, en amont du col de la tuyère ou au niveau de ce col.

Toutefois, le bâti principal peut être avantageusement fixé sur une partie non déployable du divergent de la tuyère.

De façon encore plus particulière, le corps de l'actionneur peut lui même être articulé et ancré sur la partie non déployable du divergent, en amont du bâti principal.

Selon un premier mode de réalisation possible, les première et deuxième bielles sont rectilignes.

Dans ce cas, selon un mode de réalisation plus particulier, ladite troisième zone du corps de la première bielle sur laquelle est articulée l'extrémité libre de l'organe moteur mobile de l'actionneur constitue une zone intermédiaire du corps de la première bielle située entre lesdites première et deuxième zones qui constituent des zones d'extrémité de la première bielle.

Afin de réduire l'encombrement en position reployée, la deuxième bielle peut présenter une longueur plus importante que celle de la première bielle.

Selon un deuxième mode de réalisation possible, qui permet de réduire l'encombrement, la première bielle présente une courbure entre lesdites première et deuxième zones tandis que la deuxième bielle est rectiligne.

Dans ce cas, de préférence, ladite première zone de la première bielle qui est articulée sur le bâti principal constitue une zone intermédiaire du corps de la première bielle située entre lesdites deuxième et troisième zones qui constituent des zones d'extrémité de la première bielle.

Avantageusement, ladite butée de centrage est en contact avec la deuxième bielle aussi bien dans la position finale déployée que dans la position finale reployée du divergent déployable.

D'une façon générale, le mécanisme de déploiement selon l'invention est remarquable en ce que le verrouillage du système en position déployée est obtenu automatiquement de façon intégrée, sans apport d'organe mécanique complémentaire complexe ou fragile, après le passage du point d'alignement des bielles et n'empêche pas la réversibilité.

### Brève description des dessins

D'autres caractéristiques et avantages de l'invention ressortiront de la description suivante de modes particuliers de réalisation, donnés à titre d'exemples non limitatifs, en référence aux dessins annexés sur lesquels :
- la figure 1 est une vue en élévation d'une tuyère de moteur-fusée équipée d'un mécanisme de déploiement selon un premier mode de réalisation de l'invention, le divergent étant en position reployée,
- la figure 2 est une vue en élévation semblable à celle de la figure 1, mais le divergent étant en position déployée,
- la figure 3 est une vue schématique en coupe transversale selon la ligne III-III de la figure 1 montrant l'agencement d'un bâti de mécanisme de déploiement selon l'invention,
- la figure 4 est une vue en perspective d'une tuyère selon le mode de réalisation des figures 1 et 2,
- la figure 5 est une vue en élévation et demi-coupe axiale d'une tuyère de moteur-fusée montrant un mécanisme de déploiement selon l'invention, conformément à un deuxième mode de réalisation de l'invention, un seul des trois ensembles identiques de déploiement étant représenté, et
- la figure 6 est une vue en demi-coupe axiale de la tuyère des figure 1 à 4 montrant un mécanisme de déploiement placé dans différentes positions successives.

### Description détaillée de modes particuliers de réalisation

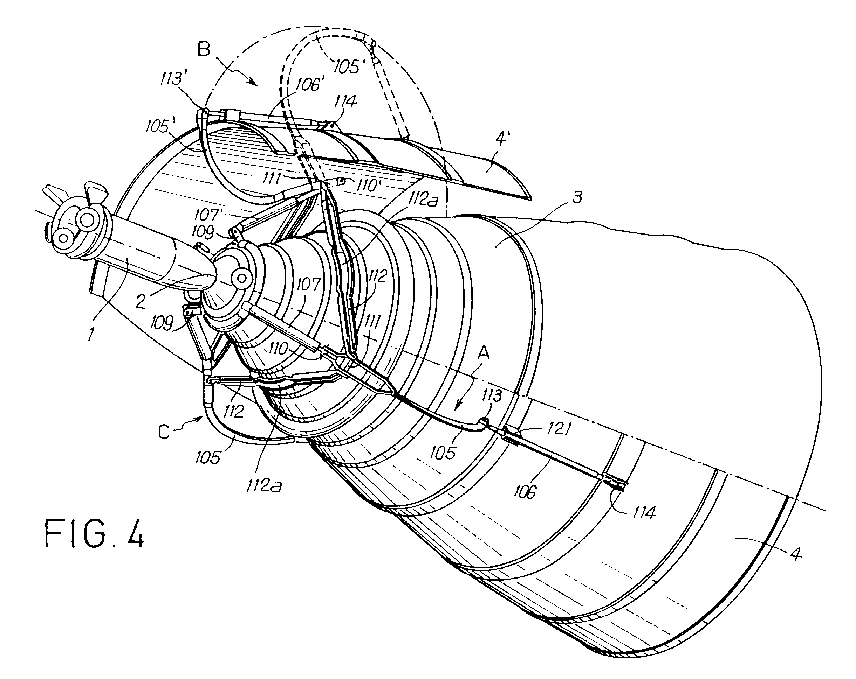

La présente invention concerne un mécanisme de déploiement de divergent déployable du type comprenant trois ensembles de manoeuvre A,B,C (figure 4) répartis autour d'une tuyère 1 à 4 de moteur-fusée et commandés de façon synchronisée pour assurer de déploiement ou le reploiement d'une partie déployable 4 d'un divergent 3,4 qui prolonge une chambre de combustion 1 au-delà d'un col de tuyère 2.

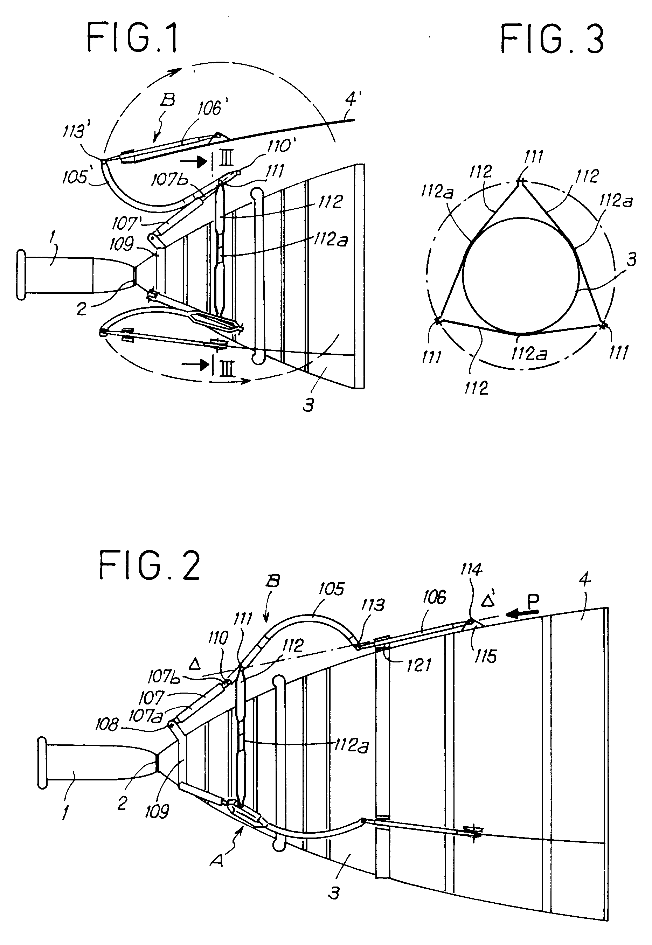

Si l'on considère plus particulièrement le mode de réalisation préférentiel des figures 1 à 4 et 6, on voit que les trois ensembles de manoeuvre A,B,C, sont identiques et montés de façon symétrique autour de l'axe de l'ensemble moteur, sur un bâti principal 112 fixé sur une partie non déployable 3 de la tuyère. Les trois ensembles de manoeuvre A, B, C, sont ainsi disposés de façon à former entre eux des angles voisins de 120°.

Le bâti principal (figure 3) est constitué essentiellement d'une structure triangulaire 112 comprenant trois éléments fixés en leur zone centrale 112a sur la partie non déployable 3 de la tuyère, laquelle peut être réalisée notamment en matériaux composites.

Les extrémités des trois éléments constituant les sommets du bâti triangulaire 112 définissent des chapes de support d'axes d'articulation de bielles 105 en des zones référencées 111.

Chaque ensemble de manoeuvre A,B,C comprend ainsi une première bielle 105 courbe (figure 1,2,4 et 6) qui est articulée en une première zone 111 sur le bâti principal 112 et qui présente deux zones d'extrémité également munies d'axes d'articulation.

La zone d'extrémité de la bielle 105 la plus proche de la première zone 111, et réunie à cette dernière par une portion rectiligne ou quasi-rectiligne, est articulée sur l'extrémité libre 110 de la tige 107b d'un vérin 107 dont la base du corps 107a est elle-même montée sur une articulation 108 fixée sur un support 109 rendu solidaire de la partie du divergent non déployable 3, dans une zone intermédiaire entre le bâti principal 112 et le col de tuyère 2.

La zone d'extrémité de la bielle 105 réunie à la première zone 111 par une portion courbe est articulée sur une extrémité amont 113 d'une deuxième bielle 106, rectiligne, dont l'extrémité aval 114 est articulée sur un support de bielle 115 monté sur la partie déployable 4 du divergent, laquelle partie déployable 4 peut, comme la partie fixe 3, être réalisée en matériaux composites.

Comme on peut le voir sur les figures 1, 2, 4 et 6, pour chaque ensemble de manoeuvre A, B, C, une butée de centrage 121, en forme de vé, est fixée au voisinage du bord amont de la partie déployable 4 du divergent.

La butée de centrage 121 se trouve ainsi dans une position intermédiaire entre le bâti principal 112 et le support de bielle 115.

La deuxième bielle 106 vient en appui dans la butée en vé 121, par sa partie amont voisine de l'extrémité amont articulée 113, à la fois dans la position finale déployée du divergent 3,4 (figure 2 et partie inférieure de la figure 4) et dans la position finale reployée du divergent 3,4 (figure 1 et partie supérieure de la figure 4).

En position de déploiement du divergent (position basse), la butée en vé 121 assure un rôle de centrage de la deuxième bielle 106 tout en limitant la course radiale de celle-ci, et en évitant ainsi une déformation de la tuyère qui serait due à une compression radiale par chaque bielle 106.

En position de repli du divergent (position haute), les butées en vé 121 permettent de stabiliser la partie déployable 4 du divergent qui entoure la partie fixe 3 et le col de tuyère 2.

Si l'on considère plus particulièrement la figure 2, on constate qu'en position déployée du divergent 3,4, les bielles 105, 106 se trouvent dans une position d'arc-boutement ou proche de l'arc-boutement qui assure un verrouillage automatique du mécanisme dans cette position et permet au vérin 107 d'être désactivé. Le mécanisme de manoeuvre reste toutefois réversible et, en réactivant le vérin 107, la sortie de la tige de vérin 107b permet d'atteindre la position de repli du divergent représentée sur la figure 1, où, de nouveau le dispositif se retrouve verrouillé et le vérin 107 peut être désactivé.

Pour que l'élément mobile 4 du divergent soit soumis à une translation satisfaisante, il convient que pour chaque ensemble de manoeuvre A, B, C, parmi l'articulation de la première bielle 105 sur la zone 111 du bâti principal, l'articulation entre la première bielle 105 et l'extrémité amont 113 de la deuxième bielle 106, et l'articulation de l'extrémité aval 114 de la deuxième bielle 106 sur le support de bielle 115, deux articulations (par exemple l'articulation de la première bielle 105 sur le bâti principal 112 et l'articulation de la deuxième bielle 106 sur le support de bielle (115) soient de type cylindrique et présentent des axes parallèles entre eux et perpendiculaires à l'axe de la tuyère tandis que la troisième articulation (préférentiellement l'articulation entre la première bielle 105 et la deuxième bielle 106) est constituée par une rotule. Avec trois ensembles de manoeuvre A, B, C constitués chacun d'un actionneur 107 et de deux bielles 105, 106, le nombre de degrés de liberté pour assurer l'isostaticité correspond ainsi à celui de six chapes et trois rotules.

Sur les figures 1, 4 et 6 on a désigné les éléments qui se sont déplacés pour venir en position de repli par les mêmes numéros de référence que lorsque ces éléments sont en position déployée du divergent (comme par exemple sur la figure 2), mais on a affecté ces numéros de référence d'un accent, pour faciliter la compréhension du fonctionnement.

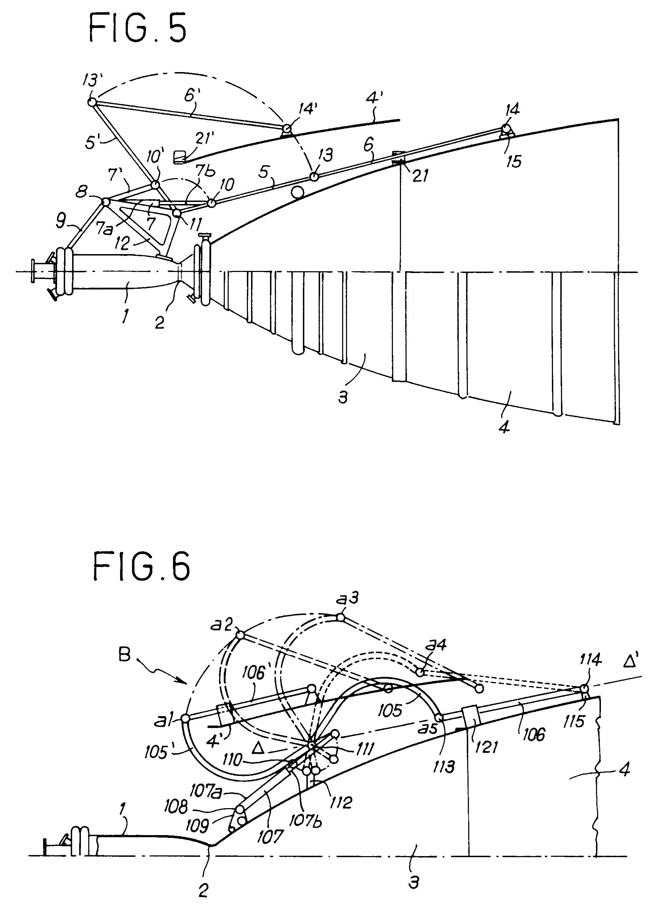

La figure 6 montre elle-même les bielles 105, 106 dans plusieurs positions intermédiaires entre les positions finales de rétraction de la partie du divergent 4 et de déploiement de cette partie déployable 4. On voit ainsi les positions successives a1 à a5 adoptées par l'articulation 113 entre les bielles 105 et 106 lors d'une phase de déploiement. Dans la position finale a5, l'auto-verrouillage est assuré par passage de l'articulation 113 légèrement au-delà de l'arc-boutement c'est-à-dire du point mort pour lequel il y a un alignement, sur une droite Δ Δ ′ (figures 2 et 6), des articulations 111, 113 et 114, c'est-à-dire de l'axe d'articulation de la zone 111 de la première bielle 105 sur le bâti principal 112, de l'extrémité amont 113 de la deuxième bielle 106 articulée sur la première bielle 105 et de l'extrémité aval 114 de la deuxième bielle 106 articulée sur le support de bielle 115.

Sur la figure 2, on a représenté par une flèche P le sens de l'effort de poussée exercé lorsque le moteur-fusée est en service. Cet effort de poussée s'exerce sur les axes 111, 113, 114 d'une manière qui tend à maintenir le mécanisme auto-verrouillé dans sa position déployée, par suite de la position des bielles 105, 106 qui est telle que l'axe 113 est positionné au-delà du point mort situé sur l'axe Δ Δ ′.

Il est particulièrement avantageux que le mécanisme de manoeuvre selon l'invention soit actionné hors jet, c'est à dire à des instants pendant lesquels le moteu-fusée n'exerce pas de poussée.

Dans ce cas, les vérins d'actionnement peuvent être de faible puissance, dès lors qu'ils agissent uniquement pour des opérations de déploiment et de reploiement sans que des efforts de poussée soient à prendre en compte, et que dans les positions finales de déploiement ou de reploiement, la poussée assure elle-même un auto-verrouillage qui permet de désactiver les vérins.

Les actionneurs 107 peuvent être constitués par des vérins de divers types, par exemple électriques, mais également par des vis à billes par exemple.

Selon une caractéristique particulière de la présente invention, les actionneurs linéaires 107 se trouvent verrouillés dès qu'ils sont désactivés.

Le verrouillage d'un actionneur désactivé peut être réalisé, dans le cas d'un actionneur hydraulique, ou éventuellement pneumatique, par l'obturation des tuyauteries qui alimentent les deux chambres situées de part et d'autre du piston.

Dans le cas d'un actionneur à vis, qu'il soit avec ou sans billes et quelle que soit l'énergie motrice, lors de la désactivation, le simple pas de vis assure un verrouillage compte tenu des frottements vis-écrou.

Le corps 107a de l'actionneur 107 peut être articulé et ancré sur la chambre de combustion 1 ou, comme représenté sur les figures 1, 2, 4 et 6, sur une partie non déployable 3 du divergent de la tuyère, en amont du bâti principal 112. L'articulation du corps 107a de l'actionneur 107 peut être réalisée, soit par des chapes indépendantes, soit par des chapes solidaires d'un bâti secondaire lui-même indépendant ou solidaire du bâti principal 112 qui, comme représenté sur les figures 1, 2, 4 et 6 est avantageusement monté sur la partie non déployable 3 du divergent, mais pourrait aussi être fixé sur la chambre de combustion 1.

Le mécanisme de déploiement selon l'invention peut être utilisé sur tous les moteurs ayant besoin d'un divergent mobile. Un tel mécanisme peut ainsi être utilisé sur les moteurs du premier, du deuxième ou du troisième étage d'un lanceur ou encore sur des moteurs d'engins spatiaux devant voyager dans l'espace puis rentrer dans une sorte de navette ou de station orbitale où, pour des raisons d'encombrement, il est avantageux qu'une partie aval du divergent soit reployée autour d'une partie amont de plus faible section.

Dans le cas d'une application à un moteur cryogénique, les bielles 105, 106 et le bâti triangulaire 112 fixé sur la partie fixe du divergent sont alors froids.

L'ensemble du mécanisme de déploiement selon l'invention présente une masse réduite par exemple de l'ordre d'une quinzaine de kilogrammes pour un moteur-fusée dont la poussée est de 70kN, ce qui contribue à conférer un bilan de masse très favorable.

L'invention se prête à diverses variantes de réalisation. Ainsi, il est par exemple possible d'utiliser pour chaque ensemble d'actionnement A,B,C du mécanisme de déploiement, non pas un vérin 107, une bielle courbe 105 et une bielle rectiligne 106, comme décrit précédemment, mais un ensemble comprenant un vérin 7 et deux bielles rectilignes 5,6, comme illustré sur la figure 5.

Ce deuxième mode de réalisation tend à être un peu plus encombrant que le premier mode de réalisation, en position de repli du fait précisément de l'absence de courbure de la bielle 5.

Toutefois, l'encombrement peut rester acceptable, en particulier si la deuxième bielle 6 présente une longueur plus importante que celle de la première bielle 5.

Dans le cas du mode de réalisation de la figure 5, les agencements du bâti principal 12 et du vérin 7 sont également un peu différents du cas du mode de réalisation précédemment décrit.

Ainsi, comme on peut le voir sur la figure 5, le bâti principal 12 est fixé sur la chambre de combustion 1 du moteur-fusée, légèrement en amont du col 2 de la tuyère, et non pas sur le divergent.

Le support 9 du corps la du vérin 7 est également monté sur la chambre de combustion 1, et se trouve relié au bâti principal 12 pour renforcer celui-ci sous la forme d'une assise triangulaire.

Dans le mode de réalisation de la figure 5, l'extrémité libre 10 de la tige de vérin 7b est pas ailleurs articulée sur une zone de la première bielle 5 qui constitue une zone intermédiaire entre les zones d'extrémité de cette bielle 5 respectivement articulées en une zone 11 du bâti principal 12 et à l'extrémité amont 13 de la deuxième bielle 6, dont l'extrémité aval 14 est articulée, comme dans le mode de réalisation des figures 1 à 4, sur une butée 15 montée sur la partie déployable du divergent 3,4.

Une butée en vé 21, placée au voisinage du rebord de la partie déployable 4 du divergent 3,4 sert de centrage et de limitation de la course de la bielle 6 en position de déploiement du divergent, comme dans le cas du mode de réalisation des figures 1 à 4. En revanche, en position de reploiement du divergent (éléments dont les numéros de référence sont affectés d'un accent sur la figure 5), c'est à dire lorsque la tige de vérin 7b est rentrée dans le corps 7, la deuxième bielle 6′ n'est pas engagée dans la butée 21′, lorsque, comme sur la figure 5, on désire limiter le débattement des bielles 5′, 6′ vers le support de la tuyère en position de reploiement du divergent.

## Revendications

1. Mécanisme auto-verrouillable et réversible de déploiement d'un divergent déployable de tuyère prolongeant une chambre de combustion de moteur-fusée, comprenant trois ensembles d'actionnement (A,B,C) identiques montés sur un bâti principal (12 ; 112) fixé sur ladite chambre de combustion ou une partie non déployable de la tuyère,
caractérisé en ce que chaque ensemble d'actionnement (A,B,C) comprend :
a) une butée de centrage (21 ; 121) montée au voisinage du bord amont de la partie déployable (4) du divergent (3,4), en aval du bâti principal (12 ; 112),
b) un support de bielle (15 ; 115) monté sur ladite partie déployable (4) du divergent (3,4) en aval de ladite butée de centrage (21 ; 121),
c) une première bielle (5 ; 105) dont une première zone (11 ; 111) est articulée sur ledit bâti principal (12 ; 112),
d) une deuxième bielle (6 ; 106), dont une extrémité amont (13 ; 113) est articulée sur une deuxième zone de ladite première bielle (5 ; 105) et une extrémité aval (14 ; 114) est articulée sur ledit support de bielle (15 ; 115), ladite deuxième bielle (6 ; 106) coopérant avec ladite butée de centrage (21 ; 121) au moins dans la position déployée,
e) un actionneur linéaire (7; 107) comprenant un corps (7a; 107a) ancré et articulé sur une partie non déployable (1,2,3) de la tuyère et un organe moteur mobile (7b ; 107b) dont l'extrémité libre (10 ; 110) est articulée sur une troisième zone de ladite première bielle (5 ; 105),
en ce que les première et deuxième bielles (5, 6; 105, 106) et l'actionneur (7 ; 107) sont agencés de telle manière qu'ils assurent un auto-verrouillage en position déployée par passage au point mort ou légèrement au-delà du point mort pour lequel il y a alignement des points constitués par l'axe d'articulation sur le bâti principal (2; 112) de la première zone (11 ; 111) de la première bielle (5; 105), l'extrémité amont (13 ; 113) de la deuxième bielle (6 ; 106) articulée sur la deuxième zone de la première bielle (5 ; 105) et l'extrémité aval (14 ; 114) de la deuxième bielle (6 ; 106) articulée sur le support de bielle (15 ; 115) monté sur la partie déployable (4) du divergent (3,4), et en ce que l'actionneur (7 ; 107) est désactivé dans chacune des positions finales de déploiement et de reploiement du divergent déployable (3,4).

2. Mécanisme selon la revendication 1, caractérisé en ce que la butée de centrage (21 ; 121) présente la forme d'un vé et assure la position correcte de la deuxième bielle (6 ; 106)pour réaliser le verrouillage en position déployée.

3. Mécanisme selon la revendication 1 ou 2, caractérisé en ce que l'actionneur (7; 107) se trouve verrouillé dès qu'il est désactivé.

4. Mécanisme selon l'une quelconque des revendications 1 à 3, caractérisé en ce qu'il coopère avec un dispositif de commande prévu pour être activé à des instants où le moteur-fusée n'exerce aucune poussée et en ce que l'actionneur (7 ; 107) est de faible puissance.

5. Mécanisme selon l'une quelconque des revendications 1 à 4, caractérisé en ce que les première et deuxième bielles (5,6) sont rectilignes.

6. Mécanisme selon l'une quelconque des revendications 1 à 5, caractérisé en ce que ledit bâti principal (12) est fixé sur la chambre de combustion (1) du moteur-fusée, en amont du col (2) de la tuyère ou au niveau de ce col (2).

7. Mécanisme selon l'une quelconque des revendications 1 à 6, caractérisé en ce que ladite troisième zone du corps de la première bielle (5) sur laquelle est articulée l'extrémité libre (10) de l'organe moteur mobile (7b) de l'actionneur (7) constitue une zone intermédiaire du corps de la première bielle (5) située entre lesdites première et deuxième zones qui constituent des zones d'extrémité de la première bielle (5).

8. Mécanisme selon la revendication 5, caractérisé en ce que la deuxième bielle (6) présente une longueur plus importante que celle de la première bielle (5).

9. Mécanisme selon l'une quelconque des revendications 1 à 4, caractérisé en ce que la première bielle (105) présente une courbure entre lesdites première et deuxième zones tandis que la deuxième bielle (106) est rectiligne.

10. Mécanisme selon la revendication 9, caractérisé en ce que ladite première zone (111) de la première bielle (105) qui est articulée sur le bâti principal (112) constitue une zone intermédiaire du corps de la première bielle (105) située entre lesdites deuxième et troisième zones qui constituent des zones d'extrémité de la première bielle (105).

11. Mécanisme selon la revendication 9 ou 10, caractérisé en ce que ladite butée de centrage (121) est en contact avec la deuxième bielle (106) aussi bien dans la position finale déployée que dans la position finale reployée du divergent déployable (3,4).

12. Mécanisme selon l'une quelconque des revendications 9 à 11, caractérisé en ce que ledit bâti principal (112) est fixé sur une partie non déployable (3) du divergent de la tuyère.

13. Mécanisme selon la revendication 12, caractérisé en ce que le corps (107a) de l'actionneur (107) est lui-même articulé et ancré sur la partie non déployable (3) du divergent de la tuyère, en amont du bâti principal (112).

14. Mécanisme selon l'une quelconque des revendications 1 à 13, caractérisé en ce que l'articulation de la première bielle (5; 105) sur le bâti principal (12; 112) et l'articulation de la deuxième bielle (6; 106) sur le support de bielle (15; 115) présentent des axes parallèles entre eux et perpendiculaires à l'axe de la tuyère tandis que l'articulation entre la première bielle (5; 105) et la deuxième bielle (6; 106) est constituée par une rotule.

## Claims

1. Self-locking and reversible deployment mechanism for a deployable diverging portion of a nozzle extending a combustion chamber of a rocket engine, comprising three identical operative assemblies (A, B, C) mounted on a main frame (12; 112) fixed on said combustion chamber or on a non-deployable portion of the nozzle,
characterized in that each operative assembly (A, B, C) comprises:
a) a centering abutment (21; 121) mounted in the vicinity of the upstream edge of the deployable portion (4) of the diverging portion (3, 4), downstream from the main frame (12; 112),
b) a link support (15; 115) mounted on said deployable portion (4) of the diverging portion (3, 4) downstream from said centering abutment (21; 121),
c) a first link (5; 105) having a first zone (11; 111) hinged to said main frame (12; 112),
d) a second link (6; 106), having a upstream end (13; 113) hinged to a second zone of said first link (5; 105) and a downstream end (14; 114) hinged to said link support (15; 115), said second link (6; 106) co-operating with said centering abutment (21; 121) at least in the deployed position,
e) a linear actuator (7; 107) comprising a body (7a; 107a) secured and hinged to a non-deployable portion (1, 2, 3) of the nozzle and a movable drive member (7b; 107b) whose free end (10; 110) is hinged to a third zone of said first link (5; 105),
in that the first and second links (5, 6; 105, 106) and the actuator (7; 107) are disposed in such a manner as to ensure self-locking in the deployed position by reaching or slightly exceeding a dead point in which the following points are in alignment, the hinge axis on the main frame (2, 112) of the first zone (11; 111) of the first link (5; 105), the upstream end (13; 113) of the second link (6; 106) articulated on the second zone of the first link (5; 105) and the downstream end (14; 114) of the second link (6; 106) articulated on the link support (5; 115) mounted on the deployable portion (4) of the diverging portion (3, 4) and in that the actuator (7; 107) is deactivated in each one of the deployed and retracted final positions of the deployable portion (3, 4).

2. Mechanism according to claim 1, characterized in that the centering abutment (21; 121) is V-shaped and ensures that the second link (6; 106) is properly positioned to lock the mechanism in its deployed position.

3. Mechanism according to claim 1 or 2, characterized in that the actuator (7; 107) is locked as soon as it is deactivated.

4. Mechanism according to any one of claims 1 to 3, characterized in that the mechanism co-operates with a control device designed to be activated at moments when the rocket engine is not exerting any thrust, and in that the actuator (7; 107) is of low power.

5. Mechanism according to any one of claims 1 to 4, characterized in that the first and second links (5, 6) are rectilinear.

6. Mechanism according to any one of claims 1 to 5, characterized in that said main flame (12) is fixed on the combustion chamber (1) of the rocket engine, upstream from the throat (2) of the nozzle, or level with said throat (2).

7. Mechanism according to any one of claims 1 to 6, characterized in that said third zone of the body of the first link (5) to which the free end (10) of the movable drive member (7b) of the actuator (7) is hinged constitutes an intermediate zone of the body of the first link (5) situated between said first and second zones which constitute end zones of the first link(5).

8. Mechanism according to claim 5, characterized in that the second link (6) is longer than the first link(5).

9. Mechanism according to any one of claims 1 to 4, characterized in that the first link (105) is curved between said first and second zones, while the second link (106) is rectilinear.

10. Mechanism according to claim 9, characterized in that said first zone (111) of the first link (105) which is hinged to the main frame (112) constitutes an intermediate zone of the body of the first link (105) situated between said second ad third zones which constitute end zones of the first link (105).

11. Mechanism according to claim 9 or 10, characterized in that said centering abutment (121) is in contact with the second link (106) both in the deployed final position and in the retracted final position of the deployable diverging portion (3, 4).

12. Mechanism according to any one of claims 9 to 11, characterized in that said main frame (112) is fixed on a non-deployable portion (3) of the diverging portion of the nozzle.

13. Mechanism according to claim 12, characterized in that the body (107a) of the actuator (107) is itself hinged ad secured to the non-deployable portion (3) of the diverging portion of the nozzle, upstream from the main frame (112).

14. Mechanism according to any one of claims 1 to 13, characterized in that the hinge between the first link (5; 105) and the main flame (12; 112) and the hinge between the second link (6; 106) and the link support (15; 115) have axes that are mutually parallel and perpendicular to the axis of the nozzle, while the hinge between the first link (5; 105) and the second link (6; 106) is constituted by a ball-and-socket hinge.

## Patentansprüche

1. Selbstverriegelnder und umsteuerbarer Mechanismus zum Ausklappen eines in der Verlängerung einer Brennkammer eines Raketentriebwerks befindlichen ausklappbaren Austrittskonus einer Raketendüse, der aus drei gleichen Betätigungseinheiten (A, B, C) besteht, die an einem Hauptrahmen (12; 112) angebracht sind, welcher an der genannten Brennkammer oder an einem nicht ausklappbaren Teil der Düse befestigt ist,
dadurch gekennzeichnet, daß jede Betätigungseinheit (A, B, C) aus:
a) einem Zentrieranschlag (21; 121) , der im Bereich der stromaufwärts liegenden Kante des ausklappbaren Teils (4) des Austrittskonus (3, 4) stromabwärts von dem Hauptrahmen (12; 112) angebracht ist,
b) einem Stangenhalter (15; 115), der an dem genannten ausklappbaren Teil (4) des Austrittskonus (3, 4) stromabwärts von dem genannten Zentrieranschlag (21; 121) angebracht ist,
c) einer ersten Stange (5; 105), die mit einem ersten Bereich (11; 111) an dem genannten Hauptrahmen (12; 112) angelenkt ist,
d) einer zweiten Stange (6; 106), die mit einem stromaufwärts gerichteten Ende (13; 113) an einem zweiten Bereich der genannten ersten Stange (5; 105) angelenkt ist und mit einem stromabwärts gerichteten Ende (14; 114) an dem genannten Stangenhalter (15; 115) angelenkt ist, wobei die genannte zweite Stange (6; 106) mit dem genannten Zentrieranschlag (21; 121) mindestens in der ausgeklappten Stellung zusammenwirkt,
e) einem linearen Betätigungsorgan (7; 107), das einen Körper (7a; 107a), der an einem nicht ausklappbaren Teil (1, 2, 3) der Düse verankert und angelenkt ist, sowie ein bewegliches Antriebsorgan (7b; 107b), dessen freies Ende (10; 110) an einem dritten Bereich der genannten ersten Stange (5; 105) angelenkt ist, umfaßt,
besteht,
daß die erste und zweite Stange (5, 6; 105, 106) und das Betätigungsorgan (7; 107) so konstruiert sind, daß sie eine Selbstverriegelung in ausgeklappter Stellung dadurch gewährleisten, daß sie in den Totpunkt oder leicht über den Totpunkt hinaus gelangen, bei dem die Punkte in einer Linie ausgerichtet sind, die von der Gelenkachse des ersten Bereichs (11; 111) der ersten Stange (5; 105) an dem Hauptrahmen (2; 112), vom stromaufwärts gerichteten Ende (13; 113) der zweiten Stange (6; 106), das an dem zweiten Bereich der ersten Stange (5; 105) angelenkt ist, und vom stromabwärts gerichteten Ende (14; 114) der zweiten Stange (6; 106), das an dem am ausklappbaren Teil (4) des Austrittskonus (3, 4) angebrachten Stangenhalter (15; 115) angelenkt ist, gebildet werden, und daß das Betätigungsorgan (7; 107) in jeder der Endstellungen, in ausgeklappter Stellung und in eingeklappter Stellung des ausklappbaren Austrittskonus (3, 4) desaktiviert ist.

2. Mechanismus nach Anspruch 1,
dadurch gekennzeichnet, daß der Zentrieranschlag (21; 121) V-förmig ist und die korrekte Stellung der zweiten Stange (6; 106) gewährleistet, um die Verriegelung in ausgeklappter Stellung herzustellen.

3. Mechanismus nach Anspruch 1 oder 2,
dadurch gekennzeichnet, daß das Betätigungsorgan (7; 107) verriegelt wird, sobald es desaktiviert ist.

4. Mechanismus nach einem der Ansprüche 1 bis 3,
dadurch gekennzeichnet, daß er mit einer Steuervorrichtung zusammenwirkt, die dazu vorgesehen ist, zu Zeitpunkten aktiviert zu werden, in denen das Raketentriebwerk keinerlei Schub ausübt und daß das Betätigungsorgan (7; 107) ein Organ mit geringer Leistung ist.

5. Mechanismus nach einem der Ansprüche 1 bis 4,
dadurch gekennzeichnet, daß die erste und zweite Stange (5, 6) gerade sind.

6. Mechanismus nach einem der Ansprüche 1 bis 5,
dadurch gekennzeichnet, daß der Hauptrahmen (12) an der Brennkammer (1) des Raketentriebwerks stromaufwärts von dem Düsenhals (2) oder in Höhe dieses Düsenhalses (2) befestigt ist.

7. Mechanismus nach einem der Ansprüche 1 bis 6,
dadurch gekennzeichnet, daß der genannte dritte Bereich des Körpers der ersten Stange (5), an dem das freie Ende (10) des beweglichen Antriebsorgans (7b) des Betätigungsorgans (7) angelenkt ist, einen Zwischenbereich des Körpers der ersten Stange (5) bildet, der zwischen dem genannten ersten und zweiten Bereich liegt, welche Endbereiche der ersten Stange (5) bilden.

8. Mechanismus nach Anspruch 5,
dadurch gekennzeichnet, daß die Zweite Stange (6) eine grössere Länge hat als die erste Stange (5).

9. Mechanismus nach einem der Ansprüche 1 bis 4,
dadurch gekennzeichnet, daß die erste Stange (105) zwischen dem genannten ersten und zweiten Bereich eine Krümmung aufweist, während die zweite Stange (106) gerade ist.

10. Mechanismus nach Anspruch 9,
dadurch gekennzeichnet, daß der genannte erste Bereich (111) der ersten Stange (105), der an dem Hauptrahmen (112) angelenkt ist, einen Zwischenbereich des Körpers der ersten Stange (105) bildet, der zwischen dem genannten zweiten und dritten Bereich liegt, welche Endbereiche der ersten Stange (105) bilden.

11. Mechanismus nach Anspruch 9 oder 10,
dadurch gekennzeichnet, daß sich der genannte Zentrieranschlag (121) sowohl bei ausgeklappter Endstellung als auch bei eingeklappter Endstellung des ausklappbaren Austrittskonus (3, 4) in Kontakt mit der zweiten Stange (106) befindet.

12. Mechanismus nach einem der Ansprüche 9 bis 11,
dadurch gekennzeichnet, daß der Hauptrahmen (112) an einem nicht ausklappbaren Teil (3) des Austrittskonus der Düse befestigt ist.

13. Mechanismus nach Anspruch 12,
dadurch gekennzeichnet, daß der Körper (107a) des Betätigungsorgans (107) seinerseits an dem nicht ausklappbaren Teil (3) des Austrittskonus stromaufwärts von dem Hauptrahmen (112) verankert und angelenkt ist.

14. Mechanismus nach einem der Ansprüche 1 bis 13,
dadurch gekennzeichnet, daß das Gelenk der ersten Stange (5; 105) an dem Hauptrahmen (12; 112) und das Gelenk der zweiten Stange (6; 106) an dem Stangenhalter (15; 115) Achsen aufweisen, die parallel zueinander und senkrecht zu der Düsenachse verlaufen, während das Gelenk zwischen der ersten Stange (5; 105) und der zweiten Stange (6; 106) ein Kugelgelenk ist.
